# EUROPEAN PATENT APPLICATION

(11) **EP 2 096 073 A1**
(43) Date of publication of application: **02.09.2009**
(21) Application number: 09250267.3
(22) Date of filing: 02.02.2009
(51) Int. Cl.: B66B 9/187

(54) **Improvements in or relating to lifting apparatus**

(30) Priority: 29.02.2008 GB 0803814
(71) Applicant: Muckineer Limited, Bickleigh, Tiverton Devon EX16 8RN (GB)
(72) Inventor: Caplen, Peter Frederic, Tiverton, Devon EX16 7HN (GB); McDonald, Malcolm, Tiverton, Devon EX16 8RN (GB)
(74) Representative: Greenwood, Matthew David

(57) **Abstract**

A load elevator (11) for lifting or lowering a load is provided. The elevator (11) has an upright support (12), means for raising (23) and lowering a load carrier (28) between elevated and lowered positions along the upright support, and means (40) for tilting the load carrier between a first orientation for introducing a load thereto and a second orientation for emptying a load therefrom. There are provided at least two tilt guide means (40a, 40b, 40c) at different heights along the said upright support, and means (50a, 50b, 50c) for commuting the said tilt guide means selectively between operative and inoperative conditions whereby to select the height at which the tilting of the load carrier occurs and thus the height at which it may be loaded or unloaded.

## Description

The present invention relates generally to load lifting apparatus, and in particular to an improved multi-purpose load elevator suitable for use in a wide range of applications, especially (but not exclusively) in the building industry.

When constructing buildings it is necessary to raise the building materials ever higher as the construction progresses. This has been achieved traditionally by manually carrying the building materials to a first floor staging or scaffolding level where they are temporarily stored for use. In multi-storey buildings it is, of course, necessary to erect scaffolding to provide working platforms outside the building at each floor level and to make use of mechanised lifting devices to carry the heavy building materials to the higher floors. The use of hoists or elevators with a load-bearing platform to carry building materials, either on their own or in wheelbarrows to allow them to be moved to different parts of the building at different levels is known, but in the main such hoists are relatively heavy items of equipment requiring safety gates to be installed at every level and which do not lend themselves to use on smaller sites.

With the increasing cost of labour, however, it is becoming increasingly important to mechanise the construction industry and the present invention seeks to provide a suitable load elevator which has a number of features which make it particularly suitable for use in building sites where individual houses are being constructed. The present invention seeks also to provide a load elevator which has means by which it can be easily adjusted to different sizes of building with different floor spacing allowing loading and unloading at a multiplicity of different scaffold levels.

The present invention seeks to achieve these objectives in a simple and robust manner whilst nevertheless utilising a minimum of material making it light in weight and of a design which particularly facilitates transport allowing the elevator to be moved from one site to another without difficulty.

According to one aspect of the present invention, therefore, there is provided a load elevator for lifting or lowering a load, having an upright support, means for raising and lowering a load carrier between elevated and lowered positions along the upright support, and means for tilting of the load carrier between a first orientation for introducing a load thereto and a second orientation for emptying a load therefrom, in which there are provided at least two tilt guide means at different heights along the said upright support, and means for commuting the said tilt guide means selectively between operative and inoperative conditions whereby to select the height at which the tilting of the load carrier occurs and thus the height at which it may be loaded or unloaded.

The load carrier is preferably mounted for tilting about a substantially horizontal tilt axis and in one embodiment is a bucket-like load container. Alternatively, however, the load carrier may be a platform for use in a factory or warehouse.

It is a particular feature of the present invention that the magnitude of the tilting movement may be made selectable. This has advantages in allowing orientation of the load carrier to make it suitable for receiving bulk material or individual building elements. Thus, for example, if the load carrier is to lift building bricks or blocks it is convenient for it to adopt an orientation in which there is a horizontal surface on to which the bricks or blocks may be loaded or from which they may be unloaded. Whilst moving between the lowered and elevated positions, however, this platform may be inclined to the horizontal to ensure that the building elements cannot fall from the platform. This security is provided by means of a further wall of the load carrier against which the building elements may rest during motion.

It is particularly convenient if the selection of the magnitude of the tilting movement can be effected by varying the height to which the load carrier is elevated with respect to the height of the tilt guide means. In this way, by elevating the load carrier to an unloading station and stopping its movement at an appropriate point the tilting can progress to a point where the surface on which the bricks or blocks are carried is generally horizontal. If bulk material such as mortar or cement has been placed into the container, however, further elevation of the load carrier will cause additional tilting allowing the bulk material to be tipped out, for example into a wheelbarrow to be carried away to another part of the site at that level.

In a multi-level building site where it may be necessary to work on two levels simultaneously, an embodiment of the load elevator of the invention finds particular utility. In such an embodiment the said means for commuting the tilt guide means between operative and inoperative conditions preferably comprise a mechanism for physical displacement of a part of the tilt guide means between an advanced, operative and a retracted, inoperative position. The means for commuting the tilt guide means between operative and inoperative conditions preferably comprises a movable guide rail member.

In a preferred embodiment of the invention the load carrier is tiltable about a tilt axis and the elevation of the load carrier along the upright support is achieved by means of a lift force applied through the said tilt axis.

Likewise, it is preferred that the tilt guide means of the load carrier comprise a cam follower mounted on the load carrier and engaging in use a cam mounted in a fixed relationship with respect to the upright support such that, when the cam is in the operative position, the cam follower engages it as the load carrier is elevated to a height corresponding to that of the cam.

Such a cam may be a curved guide formed or carried on the load carrier, in which the case the follower may be a pin or like member (especially one carrying a roller) secured on or carried by the upright support, and movable between an extended and a retracted position.

The lift force may be applied to the load carrier suitably via a cable wound on a drum, and the lowering motion of the load carrier may be effected by gravity (restricted by the gearing of the motor) upon release of the cable from the drum, with a suitable brake to slow its descent, and, of course, appropriate security measures to accommodate the possibility of cable breakage. Such measures are known in the art.

Commutation of the tilt guide means between operative and inoperative conditions may be effected by sliding cams into and out of the path of a follower or, alternatively, by providing cams on the load carrier and appropriately displacing cam followers.

Sensors may be provided for determining the height of the load carrier, whereby to control the tilting thereof upon engagement of the cam follower. Such control may therefore by effected via the motor driving the drum on which the cable is wound thereby achieving a simple single control for both elevation and tilting.

In a preferred embodiment of the invention the load carrier is in the form of a bucket having a substantially flat rear wall and the pivot axis about which the bucket is tiltable preferably lies parallel to the plane of this rear wall such that, upon tilting of the carrier, the rear wall can be orientated substantially horizontally to become, in effect, a load platform at an intermediate position between loading and unloading positions. In the loading position the rear wall lies at an angle inclined rearwardly from the bottom of the load container, whereas in the fully tilted or tipping position the bottom of the container is turned through more than 90° so that the rear wall of the container is inclined downwardly.

In an alternative embodiment of the invention, the means for achieving tilting at a selected one of several different levels, is achieved by an alternative mechanism. In this mechanism the load carrier preferably has pins carrying wheels engageable in arcuate slots of tilt guide means, which latter have a movable guide plate which can be moved between a first position allowing the pins to pass through the slot undeviated, and a second position in which it causes the pin to be diverted transverse the plane defined by the tilt axis, thereby to cause tilting of the load carrier.

In an alternative aspect of the invention the present invention provides a load elevator for lifting or lowering a load, having a load carrier which is tiltable about a generally horizontal tilt axis by engagement with a restraint located at a point along the path of movement of the load carrier, which restraint engages the load carrier at a point thereof transversely offset from the said tilt axis such that a tilting of the load carrier is effected upon raising or lowering of the load carrier whilst engaged with the said restraint.

In this latter aspect the said restraint may be in the form of a curved guide and the load carrier may have or carry a pin or roller which engages the curved guide as the load carrier moves along its path to a position at which tilting is to take place. There may be further provided a rectilinear guide arranged by a guide-follower member of the load carrier whereby to maintain the orientation of the load carrier as it is moved along its path to the said tilting position. For this purpose the load carrier may have an arm projecting therefrom carrying a pin or roller for engagement with the said curved guide and a pin or roller for engagement for the said rectilinear guide.

The lifting force on the load carrier is preferably applied through the said tilt axis so that the moment about the axis applied by a load can be predetermined to be in one direction.

In an alternative aspect a load elevator for lifting or lowering a load comprises a load carrier pivotally mounted to a lifting frame which is itself suspended from a lifting cable, in which the load carrier is turnable about a tilt axis with respect to the lifting frame and has an engagement member located transversely offset from the said pivot axis and at a location vertically separated therefrom, the said engagement member engaging in use an elongate guide which prevents tilting movement of the container and guides it in its motion, there being means for effecting tilting of the load carrier when it has been elevated to a given height.

The said tilting means may comprise a curved guide engageable by the said engagement member or an element carried thereby as the load carrier is displaced along the said elongate guide.

The curved guide may, of course, be part of the said elongate guide or a separate member. In the latter case the said curved guide may be commutable between an inoperative condition and an operative condition in which it replaces the said rectilinear guide.

Various embodiments of the present invention may now be more particularly described, by way of example, with reference to the accompanying drawings, in which:
Figure 1 is a perspective view of a first embodiment of the invention;
Figure 2 is a view from the front of the embodiment of Figure 1, showing an alternative structure for the tipping guide;
Figure 3 is a side view of the elevator of Figures 1 and 2 shown assembled on a building site;
Figure 4 is a rear perspective view of a bucket forming part of the elevator of Figures 1 to 3;
Figure 5 is a rear view of the elevator of Figures 1 to 4;
Figure 6 is a side view of part of the elevator illustrated in Figure 1 showing the container tilted to a first unloading position;
Figure 7 is a side view similar to that of Figure 3, of a different embodiment, showing the load container tilted to a second unloading position;
Figure 8 is a schematic rear view of a further alternative embodiment;
Figure 9 is a side view of the embodiment of Figure 8;
Figure 10 is a schematic view illustrating the elements of an embodiment of the invention partly dismantled for transport;
Figure 11 is a schematic view of a tilt guide forming part of a further embodiment suitable for permanent installation; and
Figure 12 is a schematic view of the tilt guide of Figure 11.

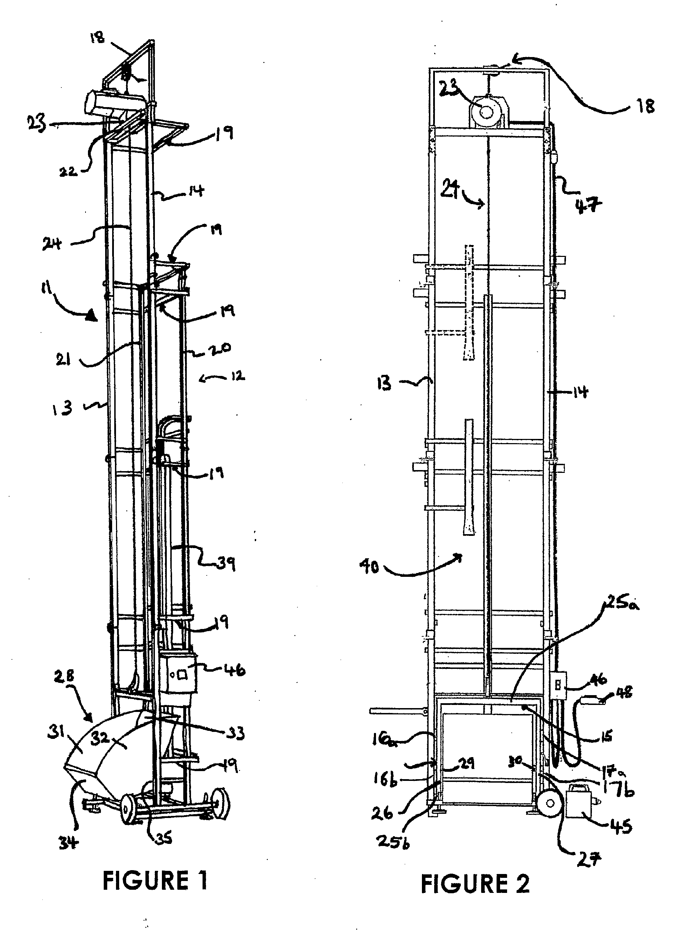

Referring first to Figure 1 and Figure 2, the elevator shown is generally indicated with the reference numeral 11 and comprises an elongate support frame generally indicated 12 comprising two main rectilinear guides 13, 14 of channel section.

As can be seen in Figure 1, the two main guides 13, 14 of the support frame 12 are joined together at the top by a transverse beam 18 and are he!d spaced from one another at the required separation by a series of U-shape frames 19. Two secondary uprights 20, 21 join the U-shape frames 19 to form a reinforcing structure.

Close to the top of the two main guides 13, 14 is a rectangular motor-support frame 22 carrying an electric motor 23 which drives a winch drum (not shown) on which is wound a cable 24 the lower end of which is secured to the lift frame 15.

As can be seen in Figure 2 more clearly, the lift frame 15 is a rectangular frame comprising two transverse members 25a, 25b and two downwardly projecting side limbs 26, 27.

Four projecting pins 16a, 16b, 17a, 17b carrying wheels (not shown) extend from the side limbs 26, 27 into the channels defined by the main guides 13, 14 so that as the cable 24 is wound in on the drum by the motor 23 to lift the frame 15 it is guided for rectilinear movement by the wheels within the channels defined by the main guides 13, 14.

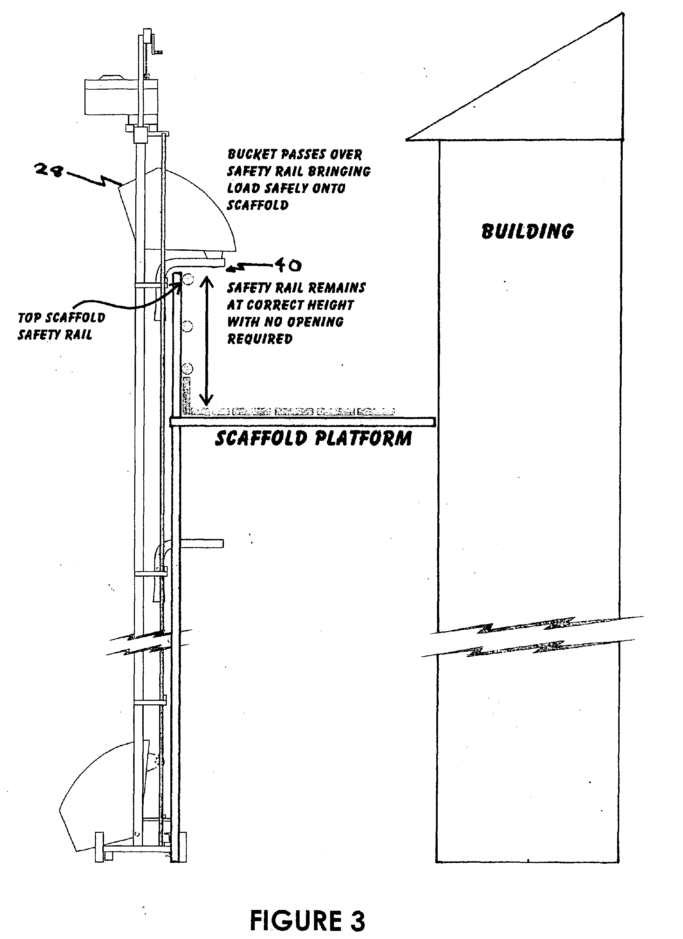

As shown in Figure 3 the elevator 11 is intended to be used at a building site where it is located adjacent the scaffolding erected round the building during construction, with the secondary uprights 20, 21 closely adjacent the scaffolding. Scaffold stubs with poles (not shown) and connector clamps (not shown) are provided for securing the primary uprights 13, 14 to the scaffolding so that the support frame 12 is held fixedly in a substantially vertical orientation with the U-shape frames 19 defining the rear of the elevator and the two channel-section main guides 13, 14 defining the front of the elevator.

It can be seen that the tilt guide 40 and consequently the bucket pass over the scaffold safety rail. This means that the safety rail does not have to be opened in order for a load to be delivered and this has considerable safety benefits.

Referring to Figure 1, a load container generally indicated 28 comprises two side walls 31, 32 an inclined rear wall 33, a lower and forwardly inclined front lip 34 and a bottom wall 35. Preferably in the loading position the 34 lip is low enough to empty a wheelbarrow into it.

The bucket includes two transverse pivot pins 29, 30 carrying wheels (not shown) which can run in channels provided in the transverse frame members 25a, 25b.

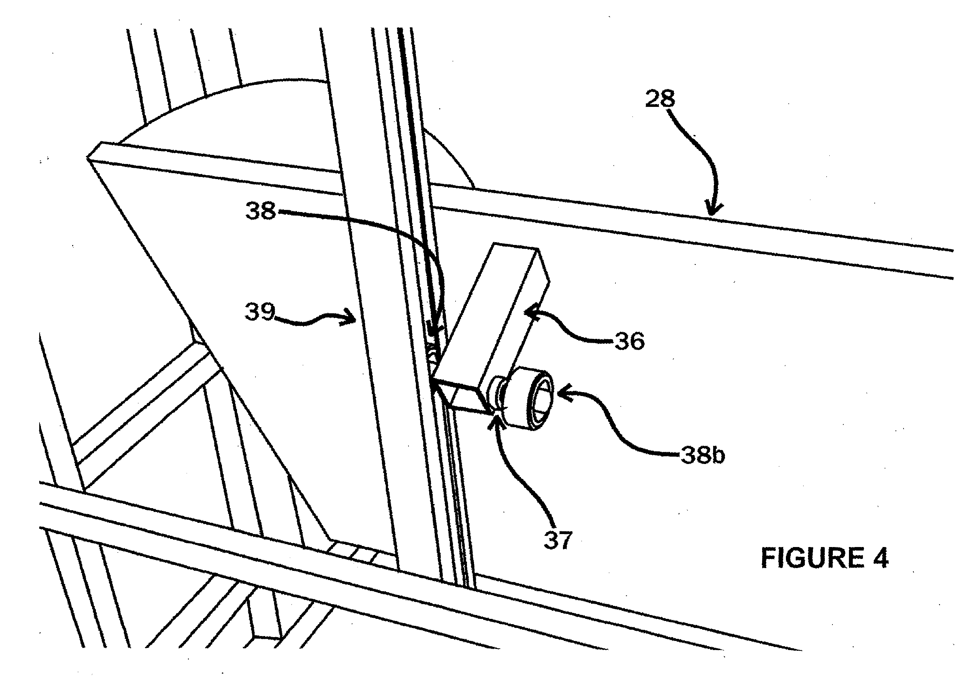

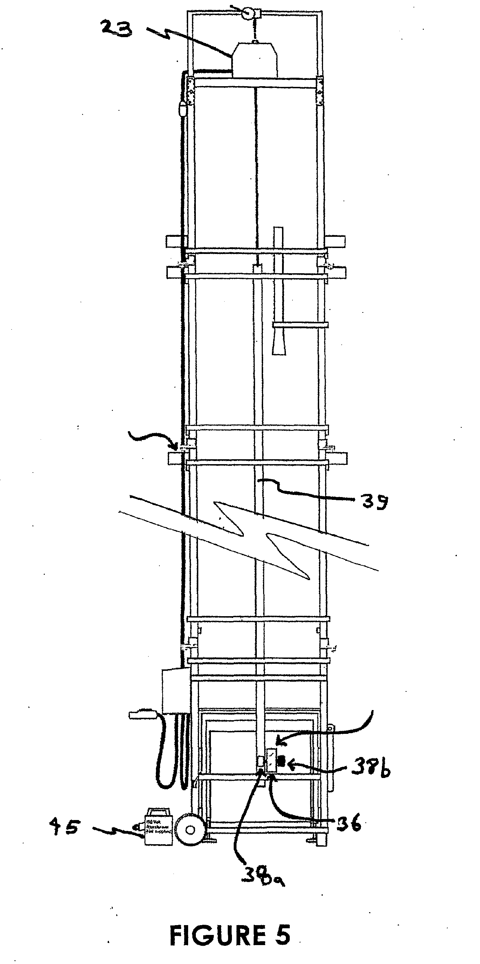

As can be seen more particularly in Figures 4 and 5 an arm 36 projects rearwardly from the inclined rear wall 33 and carries a transverse pin 37 on which are mounted two wheels 38a, 38b. The guide wheel 38a engages a rectilinear guide rail 39 to maintain the load container 28 in its orientation as shown in Figure 1.

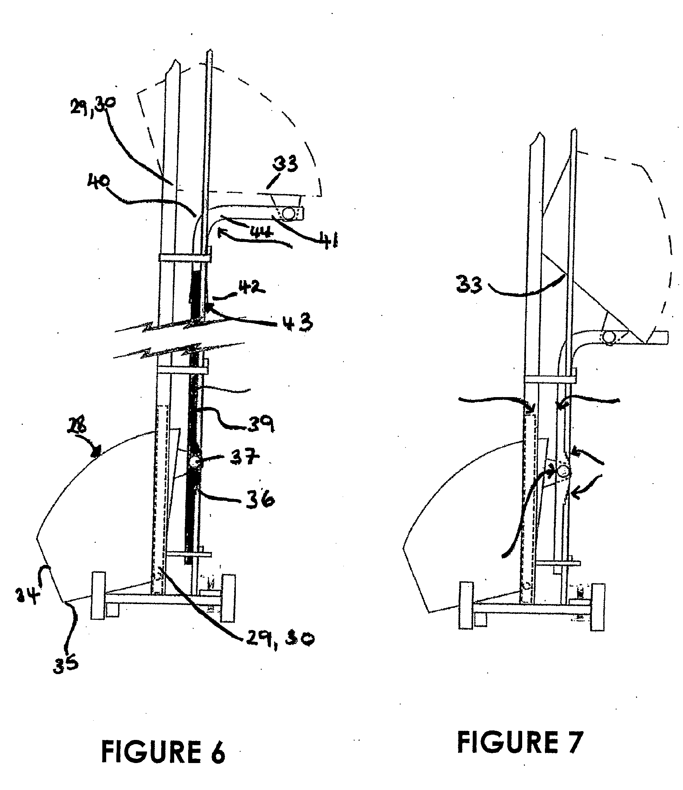

As can be seen from Figures 1, 3 and 6, substantially the entirety of the load space of the load container 28 lies to one side of the tilt axis defined by the pivot pins 29, 30 so that when loaded, the load container 28 will experience a turning moment which, as seen in Figure 6, is always anticlockwise. The engagement between the wheel 38a and the rectilinear guide 39 is, therefore, always a uni-directional contact so the guide 39 comprises merely a channel section engaged on one face by the roller 38a.

As can be seen in Figures 1, 2, 3 and 6 more clearly a tilt guide 40 is provided. The tilt guide comprises a channel-section elbow-shape guide rail with a horizontal limb 41 and a vertical limb 42, this latter having a flared lower end 43 to ensure that the wheel 38b enters the channel securely as the load container 28 is raised.

As shown best in Figure 2, the tilt guide 40 is removably connectable to the frame section 13 and can be positioned at any point along its height, with the guide 40 shown in dotted lines at an alternative position.

As can be seen in Figure 6 by the upper bucket shown in broken outline (which represents the elevated position of the bucket 28), as the bucket is raised towards its lifted position, the tipping wheel 38b enters the flared lower end 43 of the vertical limb 42 of the tilt guide 40 and follows around the curved elbow 44 to the horizontal limb 41, in which position it is shown in Figure 3.

If the lifting of the load container 28 is stopped at that point the rear wall 33 of the load container 28 is horizontal and this facilitates the unloading of building elements such as bricks or blocks by hand. Should the load container 28 be loaded with bulk material such as sand or cement, however, it is possible to elevate the load container 28 further, as shown in Figure 7, raising the tilt axis to a higher point at which level the rear wall 33 of the bucket is tilted downwardly to the rear allowing any contents to slide out, for example into a waiting wheelbarrow.

It can be seen that by altering the position of the tilt guide 40 on the frame section 13 the point at which the bucket tips can be controlled.

As is shown schematically in Figures 1, 2 and 5, the motor 23 is an electric motor driven from a 110 volt mains supply via a transformer 45 via an electronic control unit 46 connected to the motor 23 by a cable 47. A hand set 48 containing control buttons is attached to the control unit 46 to allow an operator to move to a suitable position either from the ground or from an elevated position to gain sight of the load container as it rises and suitably control the motor 23. In this embodiment the hand control unit contains only two buttons, one for causing the motor to rotate in one direction ("up") and the other for causing the electric motor 23 to rotate in the other direction ("down"). When it is desired to elevate the load container to the position shown in Figure 3, with the rear wall 33 horizontal, the operator watches the load container rise and controls the motor 23 to continue turning until he can see that the load platform 23 is horizontal, at which point he can operate the control, releasing the "up" button to stop the motor 23.

In an alternative embodiment (not shown) sensors are provided on the upright main guides 13, 14 to detect the location of the load container 28 (for example by determining the position of the pivot pins 29, 30) at predetermined locations in relation to the horizontal level of the tipping guide limb 41, and the control unit 48 is provided with a number of buttons for determining the predetermined end point of the elevating movement so that simply by pressing one or other button the load container can be elevated automatically to the position shown in Figure 3 or that shown in Figure 4 without requiring any skill in operating the unit by the operator.

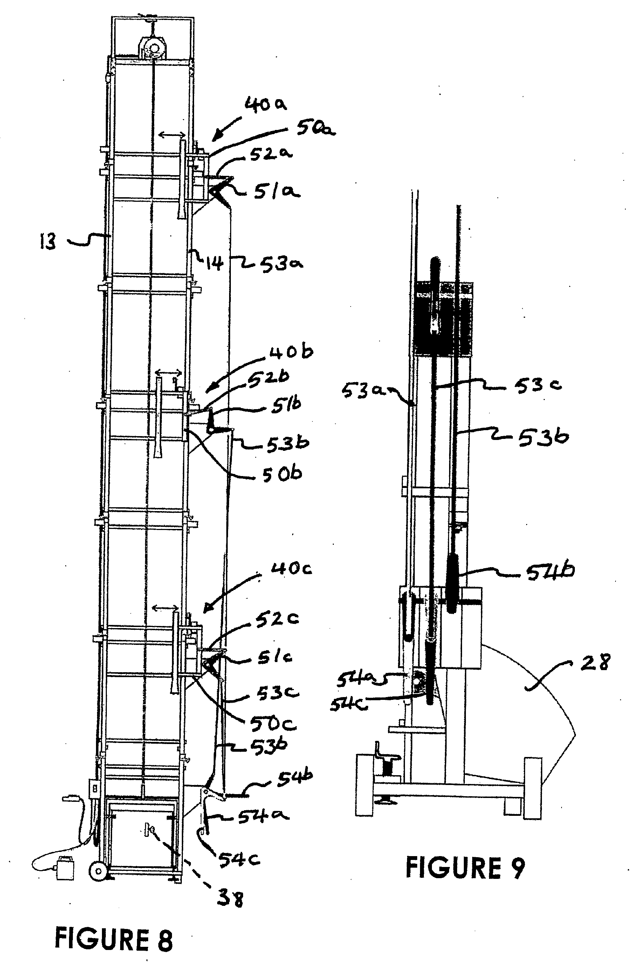

Referring now to Figures 8 and 9, there is shown in schematic form the arrangement of an alternative "high rise" embodiment in which tipping of the load container can be achieved selectively at one of three different predetermined levels. In this description the components which are the same as or equivalent to corresponding components in the embodiments of Figures 1 to 7 will be allocated the same reference numerals, with subscripts where appropriate to identify elements where there are more than one equivalent.

In this embodiment, rather than a single tilt guide 40 as shown in the embodiment of Figures 1 to 7 (although, indeed, there may be more than one such tilt guide in these embodiments) there are shown three tilt guides generally indicated 40a, 40b and 40c which are mounted on horizontal slide frames 50a, 50b, 50c so that they can be moved between a deployed position as shown for the tilt guide 40b and a withdrawn position as shown for tilt guides 40a and 40c. Deployment is effected by means of a respective bell crank 51 joined by a connecting link 52 to the respective slide frame 50 and controlled via a control rod 53 connected to a respective control lever 54.

As can be seen in Figures 8 and 9, therefore, by turning the appropriate control lever 54 from its disengaged position (in which position the levers 54a and 54c are shown in Figures 6 and 7) to the deployed position in which lever 54b is shown the associated bell crank 51 is turned to push the connecting link 52 and urge the slide frame 50 to move the tilt guide 40 into the deployed position in which it is in line with the tilt guide roller 38 carried on the load container 28. Thus, as the load container is elevated by energisation of the motor 23 it will rise until the wheel 38 engages the tilt guide 40b, at which point the load container 28 is automatically tilted to the unloaded position or the intermediate position as described in relation to Figures 3 and 4.

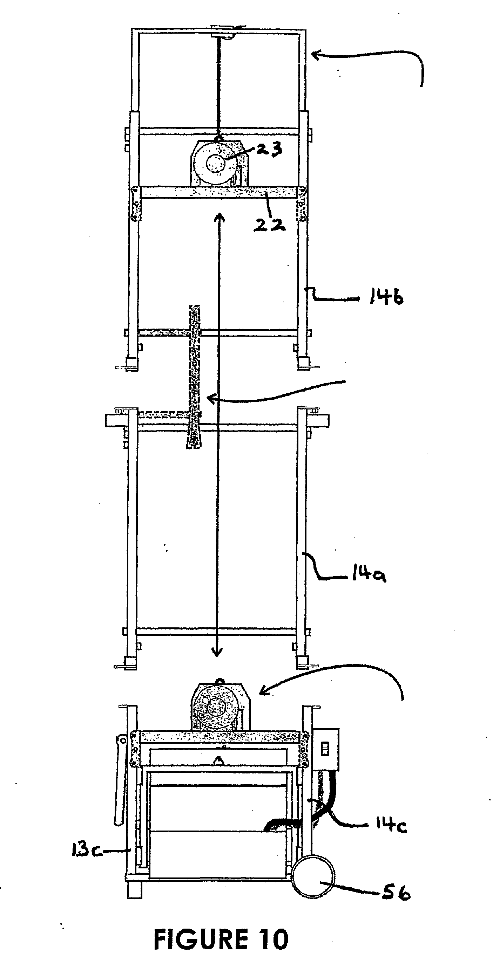

Turning now to Figure 10 the physical structure of the fabricated rails 13, 14 is illustrated. Here it can be seen that each of the rails 13, 14 is composed of a plurality of sections, again indicated by subscripts a, b, etc secured together by flanged connections to allow each section to be dismantled for transport. The motor 23 carried on the motor support frame 22 can, as shown in Figure 8, be removed from the upper section 13b, 14b of the guide rails and positioned on a lower section 13c, 14c which is provided with ground-engaging wheels 56 to facilitate manoeuvring of the lower frame part when the elevator is dismantled. This construction allows the motor 23 to be winched up to the top of the elevator after the main support structure is in place. This means that the heavy motor assembly is not at the top of the structure during assembly, which has obvious safety benefits.

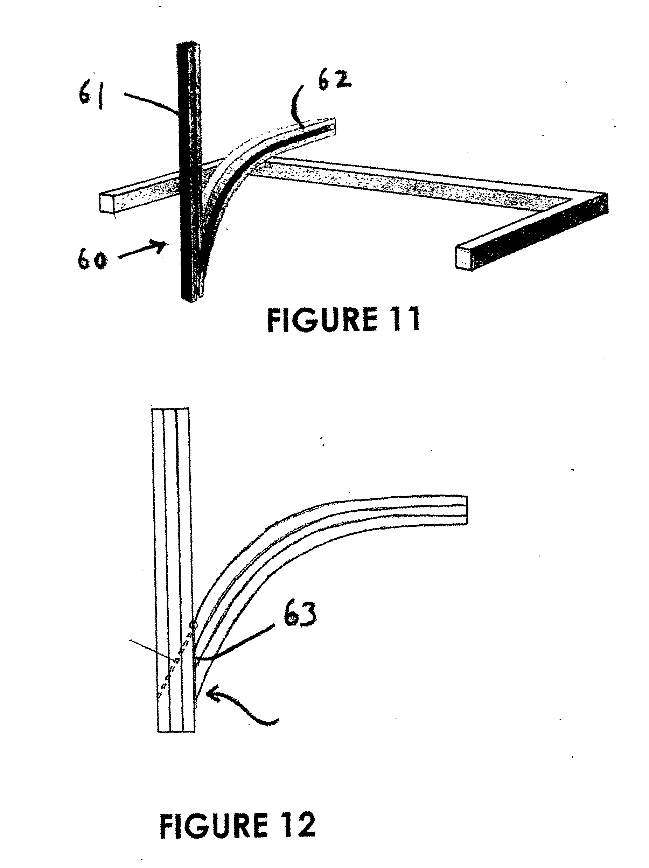

In Figures 11 and 12 there is shown the relevant components of a further alternative embodiment, suitable for permanent installations for example in factories, warehouses and other applications where it is not necessary to dismantle the elevator for transport purposes as is the case with embodiments designed for use on building sites. In this embodiment the functions performed by the rectilinear guide 39 and the tilt guide 40 are combined with a "divert" section such as that illustrated by the reference numeral 60 at each unloading station, that is at each level intended for tipping. As can be seen in Figures 9 & 10 the "divert" section comprises a rectilinear channel element 61 and a curved channel element 62 branching therefrom with a movable flap-type diverter rail 63 pivoted at a position where it can be moved between its normal, straight through position guiding the tilt rollers 38 along the rectilinear guide, to a "divert" position (shown in broken outlines in Figure 10) where the curved tilt section 62 is brought into play.

## Claims

1. A load elevator for lifting or lowering a load, having an upright support, means for raising and lowering a load carrier between elevated and lowered positions along the upright support, and means for tilting the load carrier between a first orientation for introducing a load thereto and a second orientation for emptying a load therefrom, in which there are provided at least two tilt guide means at different heights along the said upright support, and means for commuting the said tilt guide means selectively between operative and inoperative conditions whereby to select the height at which the tilting of the load carrier occurs and thus the height at which it may be loaded or unloaded.

2. A load elevator as claimed in Claim 1, in which the said load carrier is mounted for tilting about a substantially horizontal tilt axis.

3. A load elevator as claimed in Claim 1 or Claim 2, in which the said load carrier is a bucket-like load container.

4. A load elevator as claimed in Claim 1 or Claim 2, in which the load carrier is a platform.

5. A load elevator as claimed in any preceding claim, in which the magnitude of the tilting movement is selectable.

6. A load elevator as claimed in Claim 5, in which the selection of the magnitude of the tilting movement is effected by varying the height to which the load carrier is elevated with respect to the height of the tilt guide means.

7. A load elevator as claimed in any preceding claim, in which the said means for commuting the tilt guide means between operative and inoperative conditions comprise a mechanism for physical displacement of a part of the tilt guide means between an operative and an inoperative position.

8. A load elevator as claimed in any of Claims 1 to 7, in which the said means for commuting the tilt guide means between operative and inoperative conditions comprises a movable guide rail member for varying the engagement or otherwise of a guided member of the load carrier.

9. A load elevator as claimed in any preceding claim, in which the load carrier is tiltable about a tilt axis and the elevation of the load carrier along the upright support is achieved by means of a lift force applied through the said tilt axis.

10. A load elevator as claimed in any of Claims 1 to 9, in which the tilt guide means of the load carrier comprises a cam follower mounted on the load carrier and engaging in use a cam mounted in a fixed relationship with respect to the upright support such that, when the cam is in the operative position, the cam follower engages it as the load carrier is elevated to a height corresponding to that of the cam.

11. A load elevator as claimed in Claim 10, in which the cam is a curved guide formed or carried on the load carrier, and the follower is a pin or like member secured on the upright support, and movable between an extended and a retracted position.

12. A load elevator as claimed in any preceding claim, in which the lift force is applied to the load carrier by a cable wound on a drum.

13. A load elevator as claimed in any preceding claim, whereby commutation of the tilt guide means between operative and inoperative conditions is effected by sliding cams into and out of the path of a follower.

14. A load elevator as claimed in any preceding claim, in which there are provided sensors for determining the height of the load carrier, whereby to control the tilting thereof upon engagement of the cam follower.

15. A load elevator as claimed in any preceding claim, in which the load carrier is in the form of a bucket having a substantially flat rear wall and the pivot axis about which the bucket is tiltable lies parallel to the plane of the rear wall such that, upon tilting thereof, the rear wall can be orientated substantially horizontally to become a load platform in an intermediate position between loading and unloading positions.
